# EUROPEAN PATENT SPECIFICATION

(11) **EP 3 949 716 B1**
(45) Date of publication and mention of the grant of the patent: **17.04.2024**
(21) Application number: 21189046.2
(22) Date of filing: 02.08.2021
(51) Int. Cl.: A01D 45/00, A01F 1/00, A01D 1/00

(54) **MACHINE FOR MOVING VEGETABLE PLANTS**
MÄHMASCHINE FÜR GEMÜSEPFLANZEN
FAUCHEUSE POUR PLANTES POTAGÈRES

(30) Priority: 03.08.2020 IT 202000018964
(43) Date of publication of application: 09.02.2022
(73) Proprietor: Guaresi S.p.A., 44010 Bondeno (FE) (IT)
(72) Inventor: Guaresi, Massimiliano, 44010 Bondeno (FE) (IT)
(74) Representative: Fisauli, Beatrice A. M.

(56) References cited:
- WO-A1-2004/021764
- US-A- 4 147 017
- US-B1- 6 282 877

## Description

The present invention relates, in general, to a machine for moving vegetable plants. More particularly, it is a machine suitable for intervening in the field of cultivation and harvesting of vegetables and suitable for moving vegetable plants so as to facilitate their subsequent harvesting for berry selection.

In the mechanical harvesting of vegetables, such as tomatoes, peppers and others, machines are used which, in order to increase productivity, are increasingly large.

These machines therefore need room to maneuver, particularly at the head of the field, when they have to move from a row the harvesting of which they have finished to a row the harvesting of which must be started.

In addition, the rows in which harvesting begins usually have loss of products which are crushed by the wheels of the harvester and of the tractor alongside with its wagon on which the product harvested and selected by the harvester is accumulated.

In order to overcome such problems it is necessary to free the first harvesting rows and the head of the field from the plants in order to move them laterally or forward, so as to avoid their crushing.

Machines have thus been created to collect the plants with their berries and to move them sideways, which is useful for freeing an entire row of plants, usually the central portion of the field, for the subsequent intervention of the harvester and the tractor with its wagon.

However, these machines do not allow the heads of the field to be cleared comfortably and quickly, as they would pile up too many plants sideways if used for such purpose.

For such purpose, machines have been developed which pick up the plants with their berries at the head of the field and turn them over in the same row, a few meters further on, in order to create room for modern harvesters to maneuver.

These machines, however, do not allow to free an entire row, as the plants frontally accumulated would be too many to be continuously picked up and moved forward. One of these machines is disclosed in WO2004/021764A1.

The purpose and function of the present invention is to provide a vegetable plant moving machine which enables one or more rows of the field to be cleared of harvesting vegetable plants.

Further purpose of the invention is to provide a vegetable plant moving machine for easily clearing the head of a field from the plants.

Further purpose of the invention is to provide a vegetable plant moving machine which allows the plants to be moved forward or sideways with respect to the machine, depending on harvesting requirements.

These and other purposes are achieved by a machine for moving vegetable plants, for example tomatoes, peppers and others, comprising:
- a frame mobile by means of handling equipment
- a picking and moving system fixed to the frame and designed to pick up the vegetable plants from the field and move them to an adjacent area.

The harvesting and moving system in turn comprises:
- a cutting device, designed to cut the vegetable plants so that they can be separated from the ground;
- a lifting device to which the cutting device is attached, such lifting device being in turn attached to the frame and capable of lifting the vegetable plants cut by the cutting device;
- a discharging device, which is attached to the frame and discharges the plants lifted by the lifting device onto the field.

In particular, the discharging device is rotatably bound to the frame so as to discharge the plants cut in the desired position with respect to the frame of the same machine.

Thanks to the possibility of directing the discharging device in the desired direction, it is possible to discharge the plants in front of the machine, in a position placed further forward than the area in which the plants are cut by the cutting device, in order to clear, for example, the heads of the field.

Alternatively, the plants can be discharged laterally, so clearing an entire row of the field and provides a free strip of the field for the harvester and sorting machine.

Advantageously, the machine according to the invention may provide that the discharging device comprises:
- a rotating support pivotably constrained to the machine frame;
- a discharging conveyor belt fixed to the rotating support.

Thanks to such a configuration, it is practical and fast to rotate the conveyor belt fixed to the rotating support, in order to discharge the plants either in front of or to the side of the machine.

In addition, the discharging conveyor belt may comprise a first horizontal portion fixed to the rotating support and a second inclined portion protruding with respect to the first horizontal portion and thanks to which the plants are guided to the ground without extreme falls that would damage the vegetables to be harvested.

Advantageously, the second inclined portion of the discharging conveyor belt includes an end portion that remains raised from the ground, so that cut plants can be carried over plants still to be cut.

In addition, the lifting device is arranged between the front and rear wheels, making the machine compact and well balanced.

The lifting device comprises:
- a first conveyor belt provided with support and guide rollers, so as to have a first straight inclined portion and a second curved portion;
- a second conveyor belt provided with support and guide rollers, so as to have a first circular portion and a second substantially horizontal rectilinear portion.

The first conveyor belt and the second conveyor belt may cooperate with each other for lifting the plants, bringing them to a discharge zone that is higher than but corresponding to the cutting zone in the field.

In particular, for this purpose, the second curved portion of the first conveyor belt can be arranged adjacent to the first circular portion of the second conveyor belt, so that the plants are moved due to the joint action of these two portions.

Advantageously, the first circular portion of the second conveyor belt can be guided by support rollers pivotally bound to a guide wheel that can rotate with respect to the machine frame.

In this way, as the guide wheel rotates, the path of the second conveyor belt can be changed at the first circular portion.

Furthermore, the support rollers may be distributed with an oval shape on the guide wheel so that the first circular portion of the second conveyor belt is placed according to two boundary positions with respect to the second curved portion of the first conveyor belt, i.e. by approaching or receding from said curved portion.

Further features and details of the invention may be better understood from the following description, given by way of non-limiting example, as well as from the appended drawing tables in which:
Fig. 1 is a schematic lateral view of a machine for moving vegetable plants according to the invention, arranged according to a first embodiment;
Fig. 2 is a schematic top view of the machine of Figure 1;
Fig. 3 is a schematic lateral view of the machine of Figure 1, sectioned according to the plane A-A defined in Figure 2;
Fig. 4 is a schematic top view of the machine of Figure 1, arranged according to a second embodiment;
Figure 5 is a front schematic view of the machine of Figure 4.

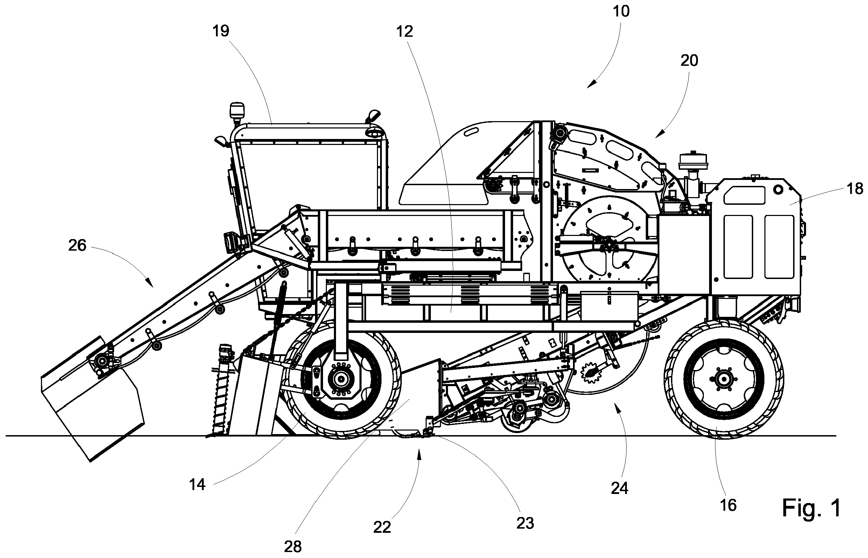

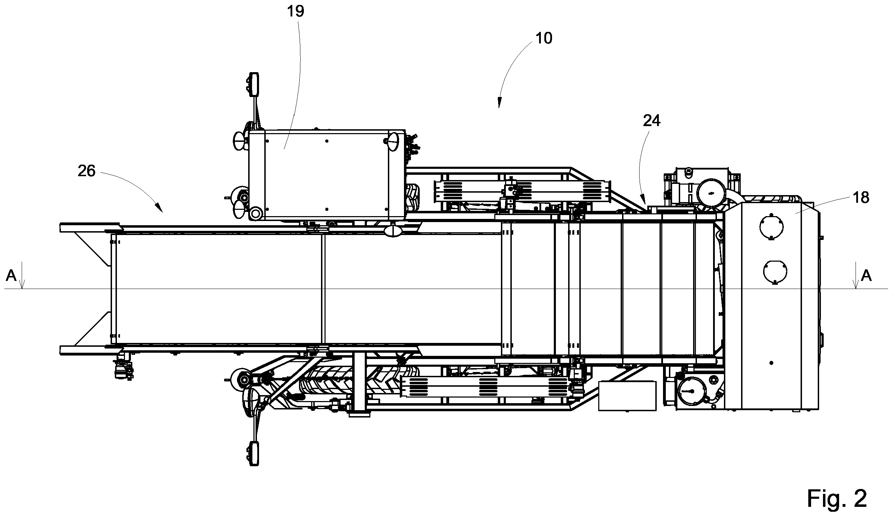

With reference to the appended figures, in particular to figures 1, 2 and 3, 10 indicates a machine for moving vegetable plants, for example tomatoes, peppers and others, made according to the invention.

The machine 10 is self-propelled and comprises a frame 12 with four driving wheels, in particular two front wheels 14 and two rear steerable wheels 16.

The machine 10 further comprises an engine 18 suitably connected to the front wheels 14 and a cabin 19 in which the operator can place himself to control the handling and the operations of the machine 12 itself.

The machine 10 includes a harvesting and displacement system 20 for collecting vegetable plants from the field and moving them to an adjacent area, frontally or laterally placed with respect to the harvesting area.

The harvesting and moving system 20 comprises:
- a cutting device 22, for cutting the vegetable plants so that they can be separated from the ground;
- a lifting device 24 for lifting the vegetable plants cut by the cutting device 22;
- an unloading device 26, designed to unload the plants lifted by the lifting device into the field at the desired position.

The cutting device 22, which is substantially located in correspondence with the front wheels 14 of the machine 10, comprises blades 23, shown in figure 1, suitable for cutting the plants, and two lateral bulkheads 28, suitable for keeping the cut plants in the collection space.

The lifting device 24, which is located between the front wheels 14 and the rear wheels 16 of the machine 10, comprises:
- a first conveyor belt 30 provided with support and guide rollers, so as to have a first inclined straight portion 32 and a second arched portion 34;
- a second conveyor belt 36 also provided with support and guide rollers, so as to have a first circular portion 38 and a second straight portion 40 which is substantially horizontal.

The first conveyor belt 30 and the second conveyor belt 36 are arranged adjacent to each other, so as to cooperate with each other.

In fact, the cut plants are first transported by the first straight portion 32 of the first conveyor belt 30, and then are pushed upwards, being received between the second arched portion 34 of the first conveyor belt 30 and the first circular portion 38 of the second conveyor belt 36.

Finally, the second substantially horizontal straight portion 40 of the second conveyor belt 36 carries and unloads the cut plants onto the unloading device 26 assisted by two side conveyors 42.

Furthermore, the first circular portion 38 of the second conveyor belt 36 is specifically guided by support rollers 39 rotatably constrained to a guide wheel 41 on which they are distributed with an oval shape.

Due to this oval arrangement, by rotating the guide wheel 41 the path described by the first circular portion 38 is modified, so bringing it closer to or further away from the second arched portion 34 of the first conveyor belt 30.

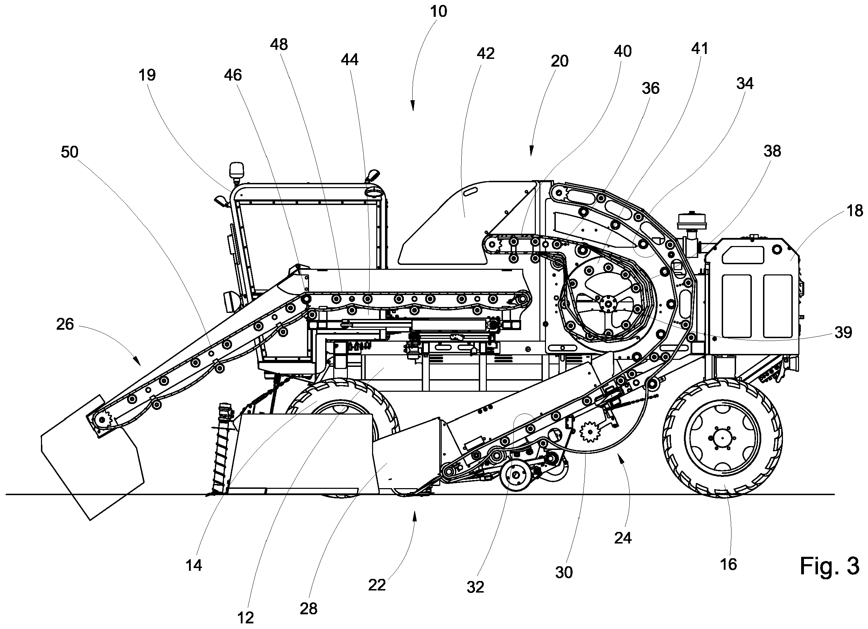

In figure 3, the guide wheel 41 is positioned so that the first circular portion 38 is further away from the second arched portion 34, but three arrangements of the same first circular portion 38 are nevertheless illustrated.

Of course, the support rollers 39 may be constrained and distributed on the guide wheel 41 according to a shape different from the oval one.

The unloading device 26 comprises:
- a rotating support 44 rotatably constrained to the frame 12 of the machine 10;
- an unloading conveyor belt 46 fixed to the rotating support 44.

In particular, the unloading conveyor belt 46 comprises a first horizontal portion 48 fixed to the rotating support 44 and a second inclined portion 50 which protrudes with respect to the first horizontal portion 48 and the end portion of which remains in any case raised from the ground.

In this way, the plants carried by the second substantially horizontal portion 40 of the second conveyor belt 36 pass from the first horizontal portion 48 of the unloading conveyor belt 46 to the second inclined portion 50, again of the same unloading conveyor belt 46, and are carried downwards, so as to be unloaded on the ground, also guided by two bulkheads 52.

Due to the presence of the rotating support 44, the unloading device 26 which can rotate by 90° can be directed towards the desired unloading area.

In particular, the unloading device 26 can be arranged according to two distinct configurations.

The first configuration, illustrated in figures 1, 2 and 3, provides that the unloading device 26 is directed towards the front of the machine 10, so that the second inclined portion 50 protrudes forward, beyond the front wheels 14 of the machine itself.

According to this first configuration, the plants are harvested and moved forward; thus configured, the machine 10 is used to clear the heads of the fields.

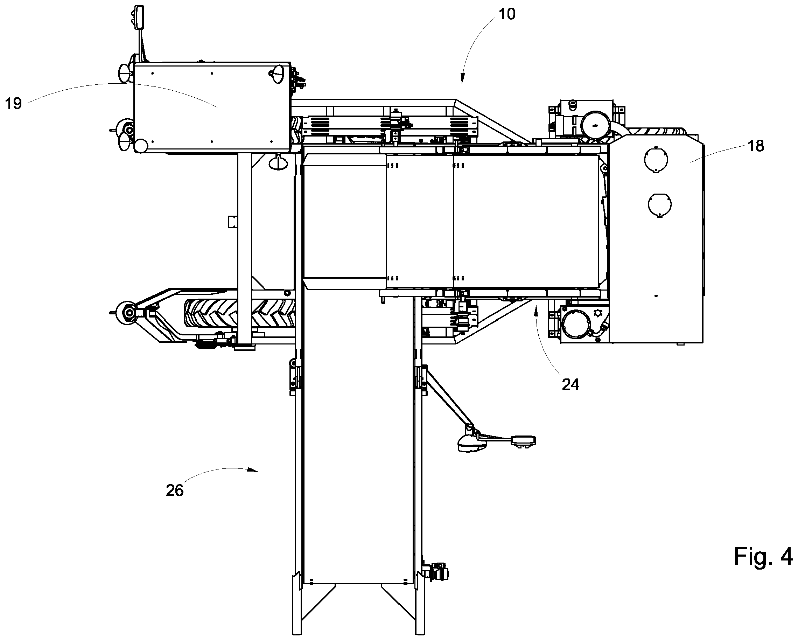

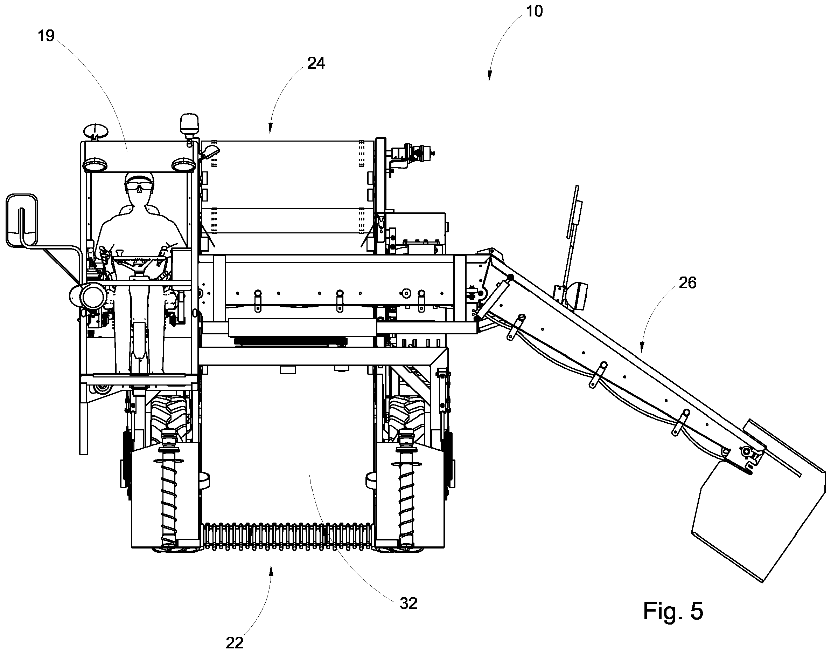

The second configuration, illustrated in figures 4 and 5, provides that the unloading device 26 is rotated by 90° with respect to the first configuration, so that the second inclined portion 50 protrudes laterally with respect to the frame 12 of the machine 10.

Thus configured, the machine 10 allows the plants to be collected and moved laterally, so as to clear one or more entire rows and thus create free space for the action of a collection and sorting machine.

All conveyor belts, both the lifting device 24 and the unloading device 26, are equipped with side bulkheads so as to prevent the cut and transported plants from falling laterally.

There are possible variants to be considered within the scope of protection; for example, a machine according to the invention may comprise an unloading device capable of rotating by 180° so as to unload the plants both on one side of the machine, as well as on the opposite side, or both front and laterally and at the rear.

In order to allow for these possibilities, the cabin may be arranged in a position different from the one envisaged in the machine 10, for example to the rear of the unloading device itself, or laterally and centrally.

Alternatively, the cabin with its associated driving and control means may be replaced by remote driving and control devices.

Additionally, a machine according to the invention may provide a plant lifting device different from the previously described lifting device 24; for example, it may be implemented by means of a lifting device capable of moving movable containers.

## Claims

1. Machine (10) for moving vegetable plants, e.g. tomatoes, peppers and others, comprising:
- a chassis (12) movable through handling means (14, 16, 18);
- a harvesting and moving system (20) attached to the chassis (12) and capable of collecting vegetable plants from the field and moving them to an adjacent area; the harvesting and moving system (20) including:
- a cutting device (22), designed to cut the vegetable plants so that they can be separated from the ground;
- a lifting device (24) to which the cutting device (22) is attached, such lifting device (24) being in turn attached to the chassis (12) and capable of lifting the cut vegetable plants from the cutting device (22);
- an unloading device (26), attached to the chassis (12) and capable of unloading in the field the plants lifted by the lifting device (24);
wherein the unloading device (26) is rotatably bound to the chassis (12) in order to unload the cut plants in the desired position with respect to the chassis (12);
**characterized in that** the lifting device (24) includes:
- a first conveyor belt (30) equipped with support and guide rollers, so as to have a first straight inclined portion (32) and a second arched portion (34);
- a second conveyor belt (36) equipped with support and guide rollers, so as to have a first circular portion (38) and a second substantially horizontal straight portion (40),
the first conveyor belt (30) and the second conveyor belt (36) cooperating with each other in order to lift the plants.

2. Machine (10) according to the preceding claim, wherein the unloading device (26) includes:
- a rotating support (44) rotatably bound to the chassis (12) of the machine (10);
- an unloading conveyor belt (46) attached to the rotating support (44).

3. Machine (10) according to the preceding claim, wherein the unloading conveyor belt (46) comprises a first horizontal portion (48) attached to the rotating support (44) and a second inclined portion (50) protruding from the first horizontal portion (48).

4. Machine (10) according to the preceding claim, wherein the second inclined portion (50) of the unloading conveyor belt (46) includes an end portion which remains raised from the ground.

5. Machine (10) according to one of the preceding claims, wherein the lifting device (24) is placed between front wheels (14) and rear wheels (16).

6. Machine (10) according to one of the preceding claims, wherein the second arched portion (34) of the first conveyor belt (30) is placed adjacent to the first circular portion (38) of the second conveyor belt (36).

7. Machine (10) according to one of the preceding claims, wherein the first circular portion (38) of the second conveyor belt (36) is guided by support rollers (39) which are rotatably bound to a guide wheel (41) capable of rotating with respect to the chassis of the machine.

8. Machine (10) according to the preceding claim, wherein the support rollers (39) are distributed with an oval shape on the guide wheel (41).

## Patentansprüche

1. Maschine (10) zum Bewegen von Gemüsepflanzen, z. B. Tomaten, Paprika und anderen, mit:
- ein Gestell (12), das durch Handhabungsmittel (14, 16, 18) beweglich ist;
- ein Ernte- und Transportsystem (20), das am Fahrgestell (12) befestigt ist und in der Lage ist, Gemüsepflanzen vom Feld einzusammeln und sie zu einem angrenzenden Bereich zu transportieren;
wobei das Ernte- und Transportsystem (20) Folgendes umfasst:
- eine Schneidevorrichtung (22), die dazu bestimmt ist, die Gemüsepflanzen so zu schneiden, dass sie vom Boden getrennt werden können;
- eine Hebevorrichtung (24), an der die Schneidevorrichtung (22) befestigt ist, wobei diese Hebevorrichtung (24) ihrerseits an dem Fahrgestell (12) befestigt ist und die geschnittenen Gemüsepflanzen von der Schneidevorrichtung (22) anheben kann
- eine Entladevorrichtung (26), die an dem Fahrgestell (12) befestigt ist und die von der Hebevorrichtung (24) angehobenen Pflanzen auf dem Feld entladen kann; wobei die Entladevorrichtung (26) drehbar mit dem Fahrgestell (12) verbunden ist, um die geschnittenen Pflanzen in der gewünschten Position in Bezug auf das Fahrgestell (12) zu entladen;
**dadurch gekennzeichnet, dass** die Hebevorrichtung (24) umfasst:
- ein erstes Förderband (30), das mit Stütz- und Führungsrollen ausgestattet ist, so dass es einen ersten geraden, geneigten Abschnitt (32) und einen zweiten gebogenen Abschnitt (34) aufweist;
- ein zweites Förderband (36), das mit Stütz- und Führungsrollen ausgestattet ist, so dass es einen ersten kreisförmigen Abschnitt (38) und einen zweiten im Wesentlichen horizontalen geraden Abschnitt (40) aufweist,
wobei das erste Förderband (30) und das zweite Förderband (36) miteinander zusammenwirken, um die Pflanzen anzuheben.

2. Maschine (10) nach dem vorhergehenden Anspruch, wobei die Entladevorrichtung (26) umfasst:
- einen drehbaren Träger (44), der drehbar mit dem Chassis (12) der Maschine (10) verbunden ist;
- ein Entladeförderband (46), das an dem rotierenden Träger (44) befestigt ist.

3. Maschine (10) nach dem vorhergehenden Anspruch, wobei das Entladeförderband (46) einen ersten horizontalen Abschnitt (48), der an der sich drehenden Halterung (44) befestigt ist, und einen zweiten geneigten Abschnitt (50), der von dem ersten horizontalen Abschnitt (48) vorsteht, umfasst.

4. Maschine (10) nach dem vorhergehenden Anspruch, wobei der zweite geneigte Abschnitt (50) des Entladeförderbandes (46) einen Endabschnitt aufweist, der vom Boden abgehoben bleibt.

5. Maschine (10) nach einem der vorhergehenden Ansprüche, wobei die Hubvorrichtung (24) zwischen Vorderrädern (14) und Hinterrädern (16) angeordnet ist.

6. Maschine (10) nach einem der vorhergehenden Ansprüche, wobei der zweite bogenförmige Abschnitt (34) des ersten Förderbandes (30) neben dem ersten kreisförmigen Abschnitt (38) des zweiten Förderbandes (36) angeordnet ist.

7. Maschine (10) nach einem der vorhergehenden Ansprüche, wobei der erste kreisförmige Abschnitt (38) des zweiten Förderbandes (36) durch Stützrollen (39) geführt wird, die drehbar mit einem Führungsrad (41) verbunden sind, das sich in Bezug auf das Chassis der Maschine drehen kann.

8. Maschine (10) nach dem vorhergehenden Anspruch, wobei die Stützrollen (39) in ovaler Form auf dem Führungsrad (41) verteilt sind.

## Revendications

1. Machine (10) pour déplacer des plantes potagères, par exemple des tomates, des poivrons et autres, comprenant :
- un châssis (12) mobile grâce à des moyens de manutention (14, 16, 18) ;
- un système de récolte et de déplacement (20) fixé au châssis (12) et capable de collecter les plantes potagères dans le champ et de les déplacer vers une zone adjacente;
le système de récolte et de déplacement (20) comprend :
- un dispositif de coupe (22), conçu pour couper les plantes potagères afin de les séparer du sol ;
- un dispositif de levage (24) auquel le dispositif de coupe (22) est attaché, ce dispositif de levage (24) étant à son tour attaché au châssis (12) et capable de soulever les plantes potagères coupées du dispositif de coupe (22) ;
- un dispositif de déchargement (26), fixé au châssis (12) et capable de décharger dans le champ les plantes soulevées par le dispositif de levage (24) ;
dans lequel le dispositif de déchargement (26) est lié de manière rotative au châssis (12) afin de décharger les plantes coupées dans la position souhaitée par rapport au châssis (12) ;
**caractérisé par le fait que** le dispositif de levage (24) comprend :
- une première bande transporteuse (30) équipée de rouleaux de support et de guidage, de manière à avoir une première partie droite inclinée (32) et une deuxième partie arquée (34) ;
- une seconde bande transporteuse (36) équipée de rouleaux de support et de guidage, de manière à présenter une première partie circulaire (38) et une seconde partie droite sensiblement horizontale (40),
la première bande transporteuse (30) et la seconde bande transporteuse (36) coopérant l'une avec l'autre pour soulever les plantes.

2. Machine (10) selon la revendication précédente, dans laquelle le dispositif de déchargement (26) comprend:
- un support rotatif (44) lié de manière rotative au châssis (12) de la machine (10);
- une bande transporteuse de déchargement (46) attachée au support rotatif (44).

3. Machine (10) selon la revendication précédente, dans laquelle la bande transporteuse de déchargement (46) comprend une première partie horizontale (48) attachée au support rotatif (44) et une deuxième partie inclinée (50) faisant saillie de la première partie horizontale (48).

4. Machine (10) selon la revendication précédente, dans laquelle la deuxième partie inclinée (50) de la bande transporteuse de déchargement (46) comprend une partie d'extrémité qui reste surélevée par rapport au sol.

5. Machine (10) selon l'une des revendications précédentes, dans laquelle le dispositif de levage (24) est placé entre les roues avant (14) et les roues arrière (16).

6. Machine (10) selon la revendication précédente, dans laquelle la deuxième partie arquée (34) de la première bande transporteuse (30) est placée à côté de la première partie circulaire (38) de la deuxième bande transporteuse (36).

7. Machine (10) selon l'une des revendications précédentes, dans laquelle la première partie circulaire (38) de la deuxième bande transporteuse (36) est guidée par des rouleaux de support (39) qui sont liés de manière rotative à une roue de guidage (41) capable de tourner par rapport au châssis de la machine.

8. Machine (10) selon la revendication précédente, dans laquelle les rouleaux de support (39) sont répartis avec une forme ovale sur la roue de guidage (41).
